# FASCICULE DE BREVET EUROPEEN

(11) **EP 4 363 706 B1**
(45) Date de publication et mention de la délivrance du brevet: **02.12.2026**
(21) Numéro de dépôt: 22740435.7
(22) Date de dépôt: 20.06.2022
(51) Int. Cl.: F02C 7/36, B64D 31/00, F02C 9/28, F02C 6/14, F02K 5/00

(54) **PROCEDE DE CONTROLE D'UNE ARCHITECTURE ENERGETIQUE D'UN SYSTEME PROPULSIF HYBRIDE**
VERFAHREN ZUR STEUERUNG DES ENERGIEAUFBAUS EINES HYBRIDANTRIEBSSYSTEMS
METHOD FOR CONTROLLING THE ENERGY SET-UP OF A HYBRID PROPULSION SYSTEM

(30) Priorité: 30.06.2021 FR 2107075
(43) Date de publication de la demande: 08.05.2024
(73) Titulaire: SAFRAN, 75015 Paris (FR)
(72) Inventeur: BONHOMME, Damien, Jacques, Arthur, 77550 MOISSY-CRAMAYEL (FR); DOS SANTOS, Victor, 77550 MOISSY-CRAMAYEL (FR); TRUC-HERMEL, Ana, 77550 MOISSY-CRAMAYEL (FR); BIDAN, Guillaume, François, Daniel, 77550 MOISSY-CRAMAYEL (FR)
(74) Mandataire: Cabinet Beau de Loménie
(86) Numéro de dépôt international: PCT/FR2022/051197
(87) Numéro de publication internationale: WO 2023/275454

(56) Documents cités:
- US-A1- 2019 002 113
- US-A1- 2020 392 859
- US-B1- 10 233 768

## Description

### Domaine Technique

La présente invention se rapporte au domaine général de la régulation des systèmes propulsifs et non propulsifs d'aéronef, et plus particulièrement au contrôle d'une architecture énergétique d'un système propulsif hybride.

### Technique antérieure

L'hybridation d'un système propulsif d'aéronef, comme une turbosoufflante, est avantageuse si elle permet de décontraindre le dimensionnement des sources de puissance. En effet, pour décontraindre le dimensionnement du système propulsif hybride, il faut garantir la disponibilité de puissance électrique pour les sources d'énergie propulsive, et garantir un niveau de prélèvement de puissance sur ces sources propulsives pour limiter la masse des sources auxiliaires.

Le pilotage des sources d'énergie non-propulsive et des machines électriques sur les arbres moteur répond alors à un double besoin :
- garantir et réguler l'opérabilité et les performances du système propulsif, et
- réguler le système énergétique global de l'aéronef pour assurer la stabilité du réseau électrique du système propulsif hybride.

Ces deux besoins contrôlent la puissance injectée ou prélevée du système propulsif avec des objectifs pouvant alors entrer en conflit au cours d'une mission :
- pour maintenir le niveau de performance spécifié, le système propulsif peut demander une injection de puissance de la part du système énergétique global de l'aéronef, et
- pour assurer l'alimentation des charges, le système énergétique global de l'aéronef peut demander un prélèvement de puissance sur le système propulsif.

Les deux niveaux de contrôle (du système propulsif et du système énergétique global de l'aéronef) doivent donc communiquer entre eux pour assurer la viabilité globale de l'architecture énergétique de l'aéronef et l'optimisation des prélèvements de puissance.

Un procédé de contrôle d'un système de génération et de contrôle de puissance d'un aéronef est divulgué dans le document US10233768B1.

Pour une architecture hybride d'une turbosoufflante, le brevet EP 3 290 680 propose ainsi de déclencher une assistance au système propulsif (turbomachine) en cas d'atteinte ou de dépassement d'une butée d'opérabilité de la turbomachine. L'architecture est alors limitée à deux modes de fonctionnement : soit le réseau électrique contrôle la puissance qu'il prélève à la turbomachine, soit la turbomachine contrôle la puissance qu'elle prélève au réseau électrique. La transition entre les deux modes entraîne alors le basculement de l'autorité de contrôle et l'inversion du flux de puissance (prélèvement ou injection de puissance à la turbomachine). Cela crée un problème de stabilité du réseau électrique et de disponibilité de la puissance pour garantir l'opérabilité de la turbomachine.

Il est donc souhaitable de disposer d'un procédé de contrôle d'une architecture énergétique d'aéronef permettant d'assurer la stabilité du réseau énergétique global et la disponibilité de puissance pour assister le système propulsif hybride.

### Exposé de l'invention

L'invention concerne un procédé de contrôle d'un système de génération et de contrôle de puissance d'un aéronef comprenant :
- un système propulsif hybride comprenant un réseau électrique et une source d'énergie propulsive,
- au moins une source d'énergie non-propulsive,
- une unité de contrôle du système propulsif hybride, et
- une unité de contrôle de la puissance globale de l'aéronef,
caractérisé en ce que le procédé comprend :
- la détermination d'une limite d'opérabilité de la source d'énergie propulsive,
- le suivi de l'opérabilité de la source d'énergie propulsive par l'unité de contrôle du système propulsif hybride, et
- le contrôle d'une puissance générée par la source d'énergie propulsive par l'unité de contrôle de la puissance globale de l'aéronef quand l'opérabilité de la source d'énergie propulsive est inférieure à ladite limite d'opérabilité déterminée ou le contrôle d'une puissance générée par la source d'énergie propulsive par l'unité de contrôle du système propulsif hybride quand l'opérabilité de la source d'énergie propulsive atteint ou dépasse ladite limite d'opérabilité déterminée.

L'architecture énergétique de l'aéronef passe ainsi d'un contrôle exercé par l'unité de contrôle du système propulsif hybride à un contrôle exercé par l'unité de contrôle de la puissance globale de l'aéronef et inversement selon l'opérabilité et la limite d'opérabilité déterminée de la source d'énergie propulsive, la limite d'opérabilité pouvant par exemple être une marge de pompage, ou une température limite ou une butée d'extinction, etc....

Selon une caractéristique particulière de l'invention, le procédé comprend également le contrôle d'une puissance générée par le réseau électrique et fournie à la source d'énergie propulsive par l'unité de contrôle du système propulsif hybride quand l'opérabilité de la source d'énergie propulsive atteint ou dépasse ladite limite d'opérabilité déterminée.

Ainsi pendant une phase d'accélération moteur de l'aéronef, durant l'état initial, le contrôle de la puissance générée par le système propulsif hybride est effectué par l'unité de contrôle de la puissance globale de l'aéronef, puis quand la limite d'opérabilité déterminée est atteinte, le contrôle de la puissance est effectué par l'unité de contrôle du système propulsif hybride. Cela permet de garantir l'opérabilité du système propulsif hybride, la continuité de la puissance transférée au réseau électrique et l'efficacité globale de l'architecture énergétique de l'aéronef.

Grâce à l'invention, l'opérabilité du système propulsif est garantie. Le contrôle de la stabilité du réseau électrique est facilité par la continuité des prélèvements de puissance lors de l'atteinte d'une première butée d'opérabilité du système propulsif.

De plus, grâce au contrôle exercé directement par l'unité de contrôle du système propulsif hybride, on peut maximiser les prélèvements de puissance du système propulsif vers le réseau électrique, ce qui permet de maximiser l'efficacité énergétique globale de l'architecture.

Selon une autre caractéristique particulière de l'invention, le procédé comprend également :
- la détermination d'une stratégie énergétique selon l'opérabilité de la source d'énergie propulsive et la disponibilité du réseau électrique et des sources d'énergie non-propulsive,
- l'application de la stratégie énergétique déterminée en générant des commandes de puissance sur les sources d'énergie non-propulsive par l'unité de contrôle de la puissance globale de l'aéronef, et en générant des commandes de puissance sur la source d'énergie propulsive et le réseau électrique par l'unité de contrôle du système propulsif hybride quand l'opérabilité de la source d'énergie propulsive atteint ou dépasse ladite limite d'opérabilité déterminée, ou par l'unité de contrôle de la puissance globale de l'aéronef quand l'opérabilité de la source d'énergie propulsive est inférieure à ladite limite d'opérabilité déterminée.

Selon une autre caractéristique particulière de l'invention, la transition entre le contrôle de la puissance générée par la source d'énergie propulsive par l'unité de contrôle de la puissance globale de l'aéronef ou par l'unité de contrôle du système propulsif hybride selon l'opérabilité de la source d'énergie propulsive est effectuée par l'unité de contrôle du système propulsif hybride.

Un autre objet de l'invention est un système de génération et de contrôle de puissance pour la mise en œuvre du procédé selon l'invention, le système comprenant :
- un système propulsif hybride comprenant un réseau électrique et une source d'énergie propulsive,
- au moins une source d'énergie non-propulsive,
- une unité de contrôle du système propulsif hybride, et
- une unité de contrôle de la puissance globale de l'aéronef.

Selon une caractéristique particulière de l'invention, la source d'énergie propulsive est un turboréacteur ou un turbopropulseur.

Selon une autre caractéristique particulière de l'invention, la source d'énergie non-propulsive comprend au moins une turbomachine, un moyen de stockage d'énergie ou une pile à combustible.

Encore un autre objet de l'invention est un aéronef comprenant un système de génération et de contrôle de puissance selon l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, un système de génération et de contrôle de puissance d'un aéronef selon un mode de réalisation de l'invention.
[Fig. 2] La figure 2 représente, de manière schématique, un procédé de contrôle d'une architecture d'aéronef comprenant un système propulsif et au moins une source d'énergie non-propulsive selon un mode de réalisation de l'invention.
[Fig. 3] La figure 3 représente, de manière schématique et partielle, l'interfaçage entre les unités de contrôle de puissance du système propulsif et de puissance globale de l'aéronef selon un mode de réalisation de l'invention.
[Fig. 4] La figure 4 représente, de manière schématique, une application du procédé de contrôle de la puissance d'un aéronef sur une phase d'accélération selon un mode de réalisation de l'invention.

### Description des modes de réalisation

Dans toute la description, le réseau électrique comprend au moins une machine électrique permettant de convertir une puissance électrique en une puissance mécanique et inversement. Par exemple, la machine électrique convertit une puissance mécanique générée par le système propulsif hybride ou par une source d'énergie non-propulsive en une puissance électrique utilisable pour le réseau électrique.

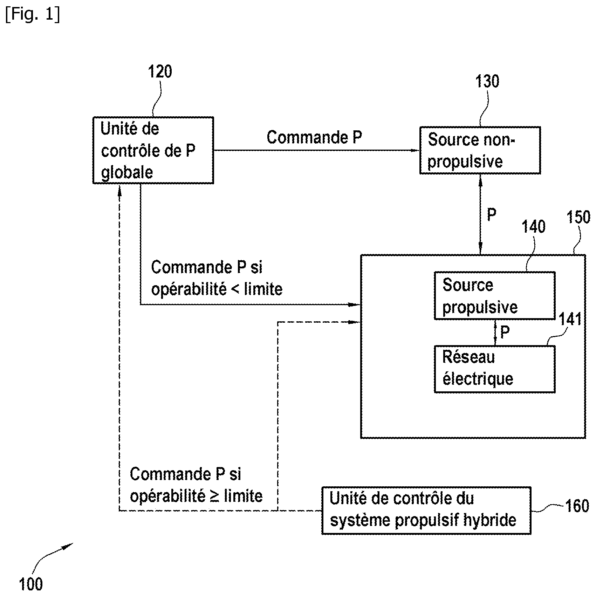

La figure 1 représente, de manière schématique et partielle, un système 100 de génération et de contrôle de puissance d'un aéronef pour la mise en œuvre du procédé de l'invention.

Le système 100 comprend un système propulsif hybride 150 comprenant une source d'énergie propulsive 140 et un réseau électrique 141. Le système 100 comprend également une unité de contrôle du système propulsif hybride 160, au moins une source d'énergie non-propulsive 130 et une unité de contrôle de la puissance globale de l'aéronef 120.

L'unité de contrôle du système propulsif hybride 160 est configurée pour contrôler un transfert de puissance P de la source propulsive 140 vers le réseau électrique 141 et/ou du réseau électrique 141 vers la source propulsive 140, quand la source d'énergie propulsive 140 atteint une limite d'opérabilité. Pour cela, elle envoie une commande de puissance P vers l'unité de contrôle de la puissance globale 120 qui transmet cette commande vers une machine électrique qui va convertir une puissance mécanique de la source d'énergie propulsive 140 en puissance électrique pour le réseau électrique 141 ou inversement.

Les limites d'opérabilité sont déterminées par l'unité de contrôle du système propulsif hybride 160 qui assure le suivi de l'état du système propulsif 150 et donc détermine si une limite est effectivement atteinte pendant le vol. L'état du système propulsif 150 est fonction de la commande de poussée et des conditions de vol.

L'unité de contrôle de la puissance globale de l'aéronef 120 est configurée pour contrôler un transfert de puissance P entre la source d'énergie propulsive 140 et le réseau électrique 141 lorsque la source d'énergie propulsive 140 n'a pas encore atteint une limite d'opérabilité. Pour cela, elle envoie une commande de puissance P vers le système propulsif hybride 150.

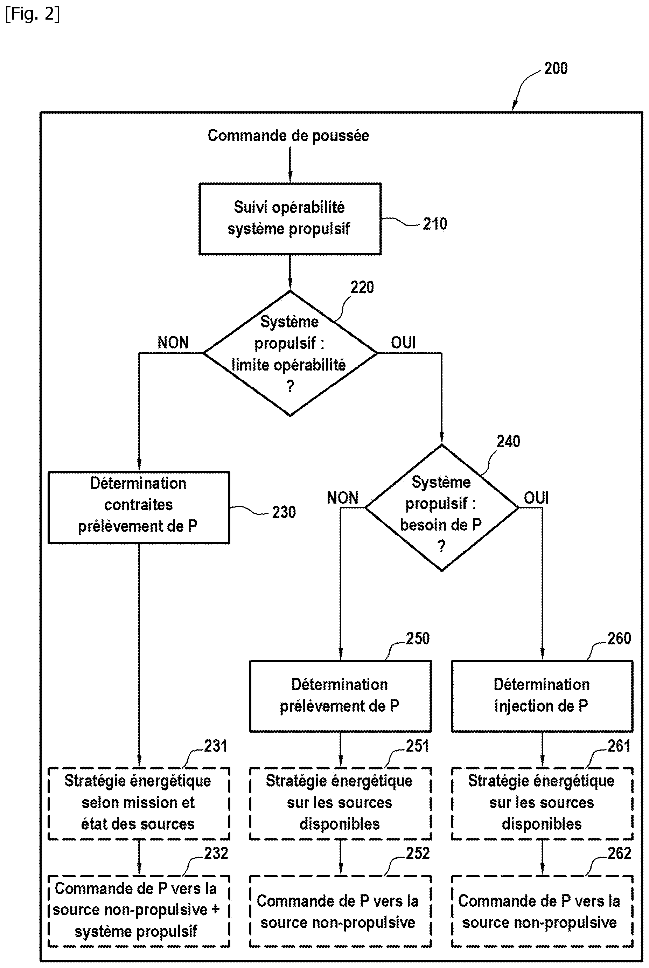

La figure 2 représente, de manière schématique, un procédé 200 de contrôle d'une architecture énergétique d'aéronef 100, telle que présentée en figure 1, selon un mode de réalisation de l'invention.

L'architecture énergétique comprend au moins un système propulsif hybride comprenant une source d'énergie propulsive et un réseau électrique, et au moins une source d'énergie non-propulsive. Une unité de contrôle du système propulsif hybride et une unité de contrôle de la puissance globale de l'aéronef permettent de contrôler l'architecture énergétique selon le procédé de l'invention décrit ci-dessous.

Le système propulsif hybride est mis en fonctionnement par une commande de poussée. Durant tout son fonctionnement, l'opérabilité de la source d'énergie propulsive est suivie 210 afin de savoir si elle est en limite d'opérabilité ou non 220.

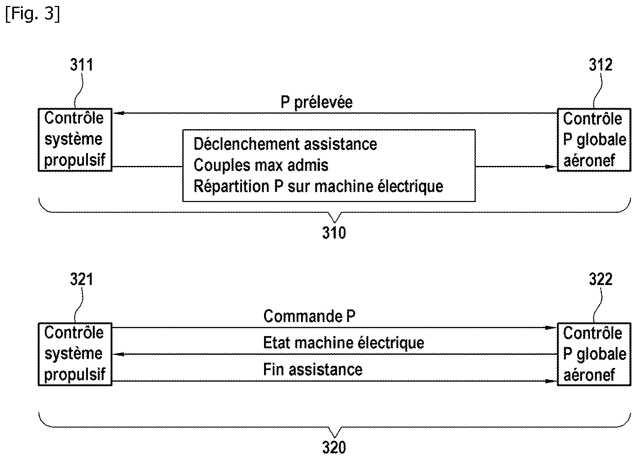

Tant que la source d'énergie propulsive est en-dessous de sa limite d'opérabilité, l'architecture énergétique de l'aéronef est dite dans un mode conventionnel (mode 310 de la figure 3). Dans le mode conventionnel 310, l'unité de contrôle de la puissance globale de l'aéronef 312 contrôle la puissance prélevée au système propulsif hybride, notamment à la source d'énergie propulsive ; tandis que l'unité de contrôle du système propulsif hybride 311 contrôle la répartition de puissance entre les machines électriques convertissant des puissances mécaniques en puissance électrique et inversement, les couples maximaux admissibles et peut déclencher un mode d'assistance (mode 320) quand sa limite d'opérabilité est atteinte. Ainsi, l'unité de contrôle de la puissance globale de l'aéronef 312 établit et envoie 232 des commandes de puissance vers le système propulsif hybride, les sources d'énergie non-propulsive et les machines électriques selon les contraintes de prélèvement de puissance transmises 230 par l'unité de contrôle du système propulsif hybride et l'état de la source d'énergie propulsive, l'état des sources d'énergie non-propulsive, l'état des machines électriques et des données de mission 231.

Dès que la source d'énergie propulsive atteint ou dépasse sa limite d'opérabilité, l'architecture énergétique passe alors en mode d'assistance (mode 320 sur la figure 3). Dans ce mode, l'unité de contrôle du système propulsif hybride 321 contrôle la puissance prélevée ou injectée à la source d'énergie propulsive. En effet, la source d'énergie propulsive peut être une source ou une charge de puissance pour l'architecture énergétique de l'aéronef. C'est également l'unité de contrôle du système propulsif hybride 321 qui indique à l'unité de contrôle de la puissance globale de l'aéronef 322 la fin du mode d'assistance 320. L'unité de contrôle de la puissance globale de l'aéronef 322 envoie des informations sur l'état des sources d'énergie non-propulsives et des machines électriques à l'unité de contrôle du système propulsif hybride 321.

Quand la source d'énergie propulsive du système propulsif hybride est en limite d'opérabilité, il faut déterminer si elle nécessite ou non une injection de puissance 240 de la part de son réseau électrique. Si une injection de puissance est nécessaire, l'unité de contrôle du système propulsif hybride détermine les besoins en puissance 260 de la source propulsive et transmet les commandes de puissance correspondantes au réseau électrique et à l'unité de contrôle de la puissance globale de l'aéronef qui établit 261 et envoie les commandes de puissance 262 sur les sources non-propulsives selon une stratégie énergétique établie en fonction des données de mission.

Si la source d'énergie propulsive ne nécessite pas d'injection de puissance, alors la source d'énergie propulsive est une source de puissance pour l'aéronef. L'unité de contrôle du système propulsif hybride détermine alors la puissance à prélever 250 sur la source d'énergie propulsive et transmet les commandes de puissance correspondantes à l'unité de contrôle de la puissance globale de l'aéronef. L'unité de contrôle de la puissance globale de l'aéronef établit 251 et envoie les commandes de puissance 252 sur des machines électriques convertissant la puissance générée par la source d'énergie propulsive selon une stratégie énergétique établie en fonction des données de mission.

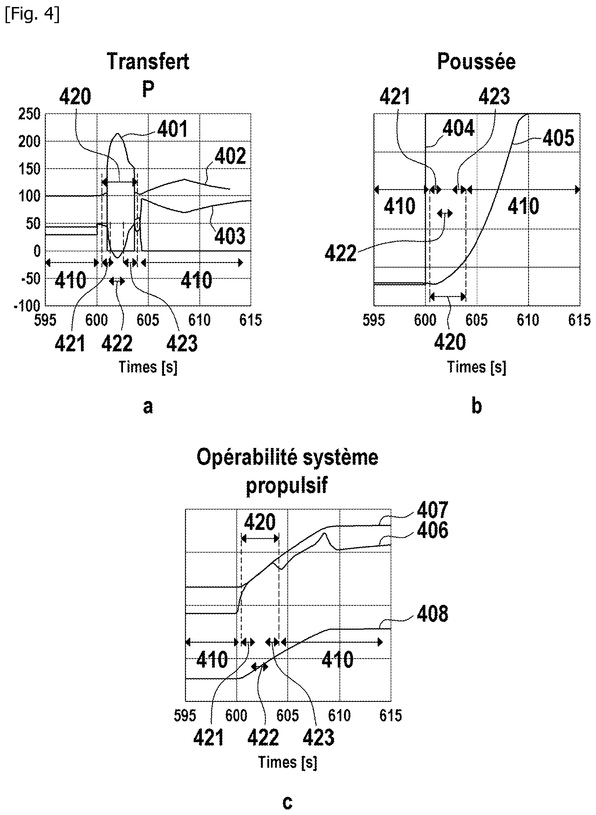

La figure 4 représente, de manière schématique, une application du procédé de contrôle de puissance sur une phase d'accélération d'un aéronef, comprenant au moins une source d'énergie non-propulsive et un système propulsif hybride comprenant une source d'énergie propulsive et un réseau électrique, selon un mode de réalisation de l'invention.

Le graphe a représente le transfert de puissance en fonction du temps entre des machines électriques 401 convertissant la puissance échangée entre les sources d'énergie non-propulsive et le réseau électrique et l'arbre primaire du système propulsif 403 et l'arbre secondaire du système propulsif 402, les deux sources d'énergie propulsive (arbre primaire et arbre secondaire) appartenant au système propulsif hybride.

Le graphe b représente la poussée 405 de l'aéronef en fonction du temps. La consigne de poussée est représentée par un échelon 404 entre une valeur minimale et une valeur maximale requise. Cette poussée 405 représente la phase d'accélération de l'aéronef.

Le graphe c représente l'opérabilité 406 du système propulsif, en fonction du temps. L'opérabilité 406 des sources d'énergie propulsive doit être comprise entre une limite basse 408 et une limite haute 407.

Tant que l'opérabilité des sources d'énergie propulsive 406 reste entre ses valeurs minimale 408 et maximale 407, le mode conventionnel 410 est mis en œuvre et le contrôle de la puissance générée par les sources d'énergie propulsive est réalisé par l'unité de contrôle de la puissance globale de l'aéronef. Quand l'opérabilité des sources d'énergie propulsives 406 dépasse sa limite haute 407, le mode d'assistance 420 est mis en œuvre et le contrôle de la puissance générée ou injectée aux sources d'énergie propulsive est réalisé par l'unité de contrôle du système propulsif hybride. Le passage du mode conventionnel 410 au mode d'assistance 420 implique une diminution des prélèvements de puissance sur le système propulsif, puis une injection de puissance vers le système propulsif 401 (graphe a). Le retour du mode d'assistance 420 au mode conventionnel 410 se fait à la sortie de la limite haute d'opérabilité 407 des sources d'énergie propulsive avec un retour vers les prélèvements de puissance initiaux. En effet, sur le graphe a, les prélèvements de puissance 401, 402 et 403 à t = 600 s (transition entre le mode conventionnel 410 et le mode d'assistance 420) sont identiques à ceux de t = 604 s (transition entre le mode d'assistance 420 et le mode conventionnel 410).

De plus, dans le mode d'assistance 420, les sources d'énergie propulsive fournissent de la puissance aux machines électriques ou reçoivent de la puissance de la part du réseau électrique compris dans le système propulsif hybride. Ainsi sur le graphe a, dans le mode d'assistance 420, on peut constater que les sources d'énergie propulsive fournissent dans un premier temps de la puissance aux machines électriques 421, puis dans un deuxième temps elles reçoivent de la puissance 422 de la part du réseau électrique du système propulsif hybride et enfin, dans un troisième temps, juste avant de revenir au mode conventionnel 410, les sources d'énergie propulsive fournissent de la puissance aux machines électriques 423.

Le procédé de contrôle selon l'invention peut s'appliquer quel que soit le nombre de machines électriques montées dans l'aéronef, quelle que soit la nature des sources d'énergie non-propulsive, quel que soit le type de réseau électrique compris dans le système propulsif hybride, et quel que soit le nombre d'arbre moteur du système propulsif hybride.

Le système propulsif hybride peut comprendre une turbomachine, par exemple un turbopropulseur ou une turbosoufflante.

Les sources d'énergie non-propulsive peuvent comprendre au moins une pile à combustible, un moyen de stockage d'énergie, comme par exemple une batterie, ou encore une turbomachine.

De plus, la limite d'opérabilité des sources d'énergie propulsive du système propulsif hybride qui détermine le passage d'un mode à l'autre peut être une marge de pompage, une température limite ou encore une butée d'extinction.

## Revendications

1. Procédé de contrôle (200) d'un système (100) de génération et de contrôle de puissance d'un aéronef comprenant :
- un système propulsif hybride (150) comprenant un réseau électrique (141) et une source d'énergie propulsive (140),
- au moins une source d'énergie non-propulsive (130),
- une unité de contrôle du système propulsif hybride (160), et
- une unité de contrôle de la puissance globale de l'aéronef (120),
**caractérisé en ce que** le procédé comprend :
- la détermination d'une limite d'opérabilité de la source d'énergie propulsive,
- le suivi de l'opérabilité (210, 220) de la source d'énergie propulsive par l'unité de contrôle du système propulsif hybride, et
- le contrôle (230) d'une puissance générée par la source d'énergie propulsive par l'unité de contrôle de la puissance globale de l'aéronef quand l'opérabilité de la source d'énergie propulsive est inférieure à ladite limite d'opérabilité déterminée ou le contrôle (250) d'une puissance générée par la source d'énergie propulsive par l'unité de contrôle du système propulsif hybride quand l'opérabilité de la source d'énergie propulsive atteint ou dépasse ladite limite d'opérabilité déterminée.

2. Procédé de contrôle d'un système de génération de puissance selon la revendication 1, comprenant également le contrôle (260) d'une puissance générée par le réseau électrique et fournie à la source d'énergie propulsive par l'unité de contrôle du système propulsif hybride quand l'opérabilité de la source d'énergie propulsive atteint ou dépasse ladite limite d'opérabilité déterminée.

3. Procédé de contrôle d'un système de génération de puissance selon l'une quelconque des revendications 1 ou 2, comprenant également :
- la détermination (231, 251, 261) d'une stratégie énergétique selon l'opérabilité de la source d'énergie propulsive et la disponibilité du réseau électrique et des sources d'énergie non-propulsive,
- l'application de la stratégie énergétique déterminée en générant (232, 252, 262) des commandes de puissance sur les sources d'énergie non-propulsive par l'unité de contrôle de la puissance globale de l'aéronef, et en générant (250, 260) des commandes de puissance sur la source d'énergie propulsive et le réseau électrique par l'unité de contrôle du système propulsif hybride quand l'opérabilité de la source d'énergie propulsive atteint ou dépasse ladite limite d'opérabilité déterminée, ou (232) par l'unité de contrôle de la puissance globale de l'aéronef quand l'opérabilité de la source d'énergie propulsive est inférieure à ladite limite d'opérabilité déterminée.

4. Procédé de contrôle d'un système de génération de puissance selon l'une quelconque des revendications 1 à 3, dans lequel la transition entre le contrôle de la puissance générée par la source d'énergie propulsive par l'unité de contrôle globale de la puissance de l'aéronef ou par l'unité de contrôle du système propulsif hybride selon l'opérabilité de la source d'énergie propulsive est effectuée par l'unité de contrôle du système propulsif hybride.

5. Procédé de contrôle d'un système de génération de puissance selon l'une quelconque des revendications 1 à 4, dans lequel la limite d'opérabilité de la source d'énergie propulsive est une marge de pompage ou une température limite ou une butée d'extinction.

6. Système (100) de génération et de contrôle de puissance configuré pour la mise en œuvre du procédé selon l'une quelconque des revendications 1 à 5, le système comprenant :
- un système propulsif hybride (150) comprenant un réseau électrique (141) et une source d'énergie propulsive (140),
- au moins une source d'énergie non-propulsive (130),
- une unité de contrôle du système propulsif hybride (160), et
- une unité de contrôle de la puissance globale de l'aéronef (120).

7. Système de génération et de contrôle de puissance selon la revendication 6, dans lequel la source d'énergie propulsive est un turboréacteur ou un turbopropulseur.

8. Système de génération et de contrôle de puissance selon l'une quelconque des revendications 6 ou 7, dans lequel la source d'énergie non-propulsive comprend au moins une turbomachine, un moyen de stockage d'énergie ou une pile à combustible.

9. Aéronef comprenant un système de génération et de contrôle de puissance selon l'une quelconque des revendications 6 à 8.

## Patentansprüche

1. Verfahren zur Steuerung (200) eines Systems (100) zur Erzeugung und Steuerung der Leistung eines Luftfahrzeugs, umfassend:
- ein Hybridantriebssystem (150), das ein elektrisches Netz (141) und eine Antriebsenergiequelle (140) umfasst,
- mindestens eine nicht-antriebsbezogene Energiequelle (130),
- eine Steuereinheit des Hybridantriebssystems (160), und
- eine Steuereinheit der Gesamtleistung des Luftfahrzeugs (120),
**dadurch gekennzeichnet, dass** das Verfahren umfasst:
- die Bestimmung einer Betriebsfähigkeitsgrenze der Antriebsenergiequelle,
- die Überwachung der Betriebsfähigkeit (210, 220) der Antriebsenergiequelle durch die Steuereinheit des Hybridantriebssystems, und
- die Steuerung (230) einer von der Antriebsenergiequelle erzeugten Leistung durch die Steuereinheit der Gesamtleistung des Luftfahrzeugs, wenn die Betriebsfähigkeit der Antriebsenergiequelle unterhalb der bestimmten Betriebsfähigkeitsgrenze liegt, oder die Steuerung (250) einer von der Antriebsenergiequelle erzeugten Leistung durch die Steuereinheit des Hybridantriebssystems, wenn die Betriebsfähigkeit der Antriebsenergiequelle die bestimmte Betriebsfähigkeitsgrenze erreicht oder überschreitet.

2. Verfahren zur Steuerung eines Systems zur Erzeugung von Leistung nach Anspruch 1, das außerdem die Steuerung (260) einer von dem elektrischen Netz erzeugten und der Antriebsenergiequelle zugeführten Leistung durch die Steuereinheit des Hybridantriebssystems umfasst, wenn die Betriebsfähigkeit der Antriebsenergiequelle die bestimmte Betriebsfähigkeitsgrenze erreicht oder überschreitet.

3. Verfahren zur Steuerung eines Systems zur Erzeugung von Leistung nach einem der Ansprüche 1 oder 2, das außerdem umfasst:
- die Bestimmung (231, 251, 261) einer Energiestrategie entsprechend der Betriebsfähigkeit der Antriebsenergiequelle und der Verfügbarkeit des elektrischen Netzes und der nicht-antriebsbezogenen Energiequellen,
- die Anwendung der bestimmten Energiestrategie durch Erzeugen (232, 252, 262) von Leistungsbefehlen für die nicht-antriebsbezogenen Energiequellen durch die Steuereinheit der Gesamtleistung des Luftfahrzeugs und durch Erzeugen (250, 260) von Leistungsbefehlen für die Antriebsenergiequelle und das elektrische Netz durch die Steuereinheit des Hybridantriebssystems, wenn die Betriebsfähigkeit der Antriebsenergiequelle die bestimmte Betriebsfähigkeitsgrenze erreicht oder überschreitet, oder (232) durch die Steuereinheit der Gesamtleistung des Luftfahrzeugs, wenn die Betriebsfähigkeit der Antriebsenergiequelle unterhalb der bestimmten Betriebsfähigkeitsgrenze liegt.

4. Verfahren zur Steuerung eines Systems zur Erzeugung von Leistung nach einem der Ansprüche 1 bis 3, wobei der Übergang zwischen der Steuerung der von der Antriebsenergiequelle erzeugten Leistung durch die Steuereinheit der Gesamtleistung des Luftfahrzeugs oder durch die Steuereinheit des Hybridantriebssystems entsprechend der Betriebsfähigkeit der Antriebsenergiequelle durch die Steuereinheit des Hybridantriebssystems erfolgt.

5. Verfahren zur Steuerung eines Systems zur Erzeugung von Leistung nach einem der Ansprüche 1 bis 4, wobei die Betriebsfähigkeitsgrenze der Antriebsenergiequelle eine Pumpspanne oder eine Grenztemperatur oder ein Abschaltanschlag ist.

6. System (100) zur Erzeugung und Steuerung der Leistung, das zur Durchführung des Verfahrens nach einem der Ansprüche 1 bis 5 konfiguriert ist, wobei das System umfasst:
- ein Hybridantriebssystem (150), das ein elektrisches Netz (141) und eine Antriebsenergiequelle (140) umfasst,
- mindestens eine nicht-antriebsbezogene Energiequelle (130),
- eine Steuereinheit des Hybridantriebssystems (160), und
- eine Steuereinheit der Gesamtleistung des Luftfahrzeugs (120).

7. System zur Erzeugung und Steuerung der Leistung nach Anspruch 6, wobei die Antriebsenergiequelle ein Turbofantriebwerk oder ein Turboproptriebwerk ist.

8. System zur Erzeugung und Steuerung der Leistung nach einem der Ansprüche 6 oder 7, wobei die nicht-antriebsbezogene Energiequelle mindestens eine Turbomaschine, ein Energiespeichermittel oder eine Brennstoffzelle umfasst.

9. Luftfahrzeug, das ein System zur Erzeugung und Steuerung der Leistung nach einem der Ansprüche 6 bis 8 umfasst.

## Claims

1. A method of control (200) of a power generation and control system (100) of an aircraft comprising:
- a hybrid propulsion system (150) comprising an electrical network (141) and a propulsive energy source (140),
- at least one non-propulsive energy source (130),
- a control unit (160) of the hybrid propulsion system, and
- an overall aircraft power control unit (120),
**characterized in that** the method comprises:
- the determination of an operability limit of the propulsive energy source,
- the monitoring (210, 220) of the operability of the propulsive energy source by the control unit of the hybrid propulsion system, and
- the control (230) of a power generated by the propulsive energy source by the overall aircraft power control unit when the operability of the propulsive energy source is less than said determined operability limit or the control (250) of a power generated by the propulsive energy source by the control unit of the hybrid propulsion system when the operability of the propulsive energy source reaches or exceeds said determined operability limit.

2. The method of control of a power generation system as claimed in claim 1, also comprising the control (260) of a power generated by the electrical network and supplied to the propulsive energy source by the control unit of the hybrid propulsion system when the operability of the propulsive energy source reaches or exceeds said determined operability limit.

3. The method of control of a power generation system as claimed in any of claims 1 or 2, also comprising:
- the determination (231, 251, 261) of an energy strategy depending on the operability of the propulsive energy source and the availability of the electrical network and of the non-propulsive energy sources,
- the application of the determined energy strategy by generating (232, 252, 262) power commands for the non-propulsive energy sources by the overall aircraft power control unit, and by generating (250, 260) power commands for the propulsive energy source and the electrical network by the control unit of the hybrid propulsion system when the operability of the propulsive energy source reaches or exceeds said determined operability limit, or (232) by the overall aircraft power control unit when the operability of the propulsive energy source is less than said determined operability limit.

4. The method of control of a power generation system as claimed in any of claims 1 to 3, wherein the transition between the control of the power generated by the propulsive energy source by the overall aircraft power control unit or by the control unit of the hybrid propulsion system depending on the operability of the propulsive energy source is carried out by the control unit of the hybrid propulsion system.

5. The method of control of a power generation system as claimed in any of claims 1 to 4, wherein the operability limit of the propulsive energy source is a surge margin or a limit temperature or a flame-out limit.

6. A power generation and control system (100) configured for the implementation of the method as claimed in any of claims 1 to 5, the system comprising:
- a hybrid propulsion system (150) comprising an electrical network (141) and a propulsive energy source (140),
- at least one non-propulsive energy source (130),
- a control unit (160) of the hybrid propulsion system, and
- an overall aircraft power control unit (120).

7. The power generation and control system as claimed in claim 6, wherein the propulsive energy source is a turbojet or a turboprop.

8. The power generation and control system as claimed in any of claims 6 or 7, wherein the non-propulsive energy source comprises at least one turbomachine, an energy storage means or a fuel cell.

9. An aircraft comprising a power generation and control system as claimed in any of claims 6 to 8.
